# DEMANDE DE BREVET EUROPEEN

(11) **EP 0 670 578 A1**
(43) Date de publication de la demande: **06.09.1995**
(21) Numéro de dépôt: 95400411.5
(22) Date de dépôt: 27.02.1995
(51) Int. Cl.: H01F 1/053

(54) **Procédé pour la confection d'un matériau magnétique sous forme solide à partir d'une poudre de nitrure intermétallique du type Sm2 Fe17 N3-x**

(30) Priorité: 02.03.1994 FR 9402389
(71) Demandeur: ALCATEL ALSTHOM COMPAGNIE GENERALE D'ELECTRICITE, F-75008 Paris (FR)
(72) Inventeur: Mocaer, Philippe, F-78350 Jouy en Josas (FR); Dubots, Patrick, F-78640 Neauple le Chateau (FR); Belouet, Christian, F-92330 Sceaux (FR)
(74) Mandataire: Laroche, Danièle

(57) **Abrégé**

Le procédé est caractérisé par le fait que l'on opère de la façon suivante :
a - on mélange intimement la poudre dudit nitrure avec de la poudre de verre ayant une température de transformation Tg comprise entre 260 et 310°C et une température de ramollissement Tf inférieure à 400°C, la proportion de poudre de verre étant comprise entre 10 et 30% du volume total;
b - on comprime ce mélange de façon à obtenir un comprimé solide;
c - le comprimé obtenu est soumis, sous atmosphère de gaz neutre, à un cycle thermique au cours duquel, pendant au moins une heure, on atteint une température au moins égale à Tf + 5°C et au plus égale à 420°C.

## Description

La présente invention concerne un procédé pour la confection d'un matériau magnétique sous forme solide à partir d'une poudre de nitrure intermétallique du type Sm₂ Fe₁₇ N₃₋ₓ, avec 0 ≦ x ≦ 1, et de préférence 0,2 ≦ x ≦ 0,7.

Ce type de composé, récemment élaboré par J. M. D. COEY, et appelé parfois "Nitromag" possède des propriétés intrinsèques intéressantes :
- Température de Curie = 475°C.
- Aimantation à saturation : µo Mₛ = 1,54 T.
- Limite maximale théorique pour le produit d'énergie (BH) (maximum d'énergie magnétique stockée) : 471 kj/m³.
- Champ d'anisotropie à température ambiante : µo Ha = 14 T.

On peut obtenir avec ce composé un champ coercitif H_{c} élevé, ainsi qu'une forte induction rémanente Bᵣ.

Cependant, ce composé se présente sous la forme de poudre et se pose le problème de sa mise en oeuvre sous la forme d'un bloc solide.

En effet, les composés de ce type sont métastables et se décomposent à des températures de l'ordre de 600 à 650°C, ce qui ne permet pas de les mettre en forme par les techniques classiques de frittage.

On peut lier ce composé poudreux à l'aide d'un polymère, cependant, le composite obtenu présente une faible tenue en température le rendant difficilement utilisable dans les moteurs électriques. Par ailleurs, un tel composite vieillit mal et est relativement hygroscopique, ce qui ne convient pas pour ce genre de nitrure qui doit être protégé de l'oxydation.

On peut également lier un tel composé poudreux au moyen d'un liant métallique tel que du zinc, mais il se produit alors une interaction entre ce liant et le matériau poudreux magnétique lors de la synthèse du composite conduisant à une dégradation des propriétés magnétiques de l'aimant ainsi formé par rapport à celles de la poudre de départ de "Nitromag".

La présente invention a pour but de proposer un procédé permettant d'éviter ces inconvénients et d'arriver à obtenir un corps solide, mécaniquement stable à des températures jusque vers 260°C, résistant à l'oxydation et conservant les qualités magnétiques de la poudre de départ. On peut ainsi utiliser un tel composite comme aimant, par exemple dans des moteurs.

L'invention a ainsi pour objet un procédé pour la confection d'un matériau magnétique sous forme solide à partir d'une poudre de nitrure intermétallique du type Sm₂ Fe₁₇ N₃₋ₓ avec 0 ≦ x ≦ 1, caractérisé par le fait que l'on opère de la façon suivante :
a - on mélange intimement ladite poudre avec de la poudre de verre ayant une température de transformation Tg comprise entre 260 et 310°C et une température de ramollissement Tf inférieure à 400°C, la proportion de poudre de verre étant comprise entre 10 et 30% du volume total;
b - on comprime ce mélange de façon à obtenir un comprimé solide;
c - le comprimé obtenu est soumis, sous atmosphère de gaz neutre, à un cycle thermique au cours duquel, pendant au moins une heure, on atteint une température au moins égale à Tf + 5°C et au plus égale à 420°C.

Selon une autre caractéristique, l'opération c est effectuée en présence d'un champ magnétique.

Ainsi, on obtient un matériau magnétique composite dans lequel la matrice, qui est du verre, est non interactive avec le nitrure intermétallique. Le composite obtenu résiste à la corrosion, la phase magnétique étant protégée par le verre des agressions chimiques de l'atmosphère ambiante.

Le matériau obtenu peut facilement, par la suite, être mis sous une forme quelconque désirée par chauffage au-dessus de la température de transformation Tg qui est relativement basse.

Enfin, le matériau obtenu présente de faibles pertes par courants induits, les particules magnétiques étant isolées les unes des autres par l'intermédiaire du verre.

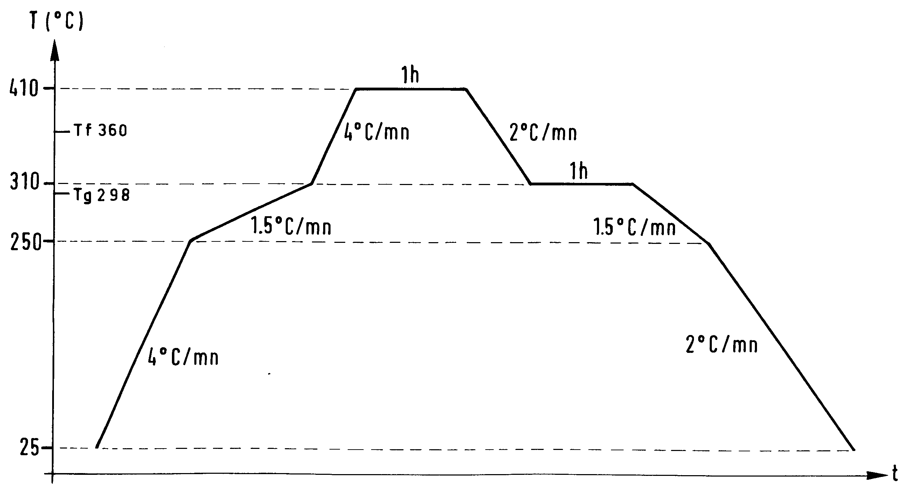

La figure unique jointe, représente un cycle thermique approprié pour l'exemple, non limitatif, donné ci-après :

On utilise comme poudre de verre du verre de soudage Schott type borate au plomb n° 8472. Sa température de transformation ou de recuit Tg, correspondant à une viscosité de 10^{13,4} poises, est de 298°C et sa température de ramollissement ou de Littleton Tf, correspondant à une viscosité de 107,6 poises, est de 360°C. Sa densité est de 6,75 g/cm³ et sa résistivité à 281°C de 10⁸ ohm-cm.

Cette poudre de verre est mélangée dans une proportion de 10 à 30 % en volume avec la poudre de Sm₂ Fe₁₇ N_{2,3} puis comprimée à froid sous une pression de 2 à 5 tonnes/cm² de façon à obtenir un comprimé solide manipulable.

Le comprimé est ensuite placé dans une enceinte mise sous vide primaire, par exemple au moyen d'une pompe à palette, et l'on introduit ensuite dans l'enceinte un gaz neutre tel que de l'argon par exemple à la pression atmosphérique. Cette opération a pour but de faire que le traitement thermique ait lieu en l'absence d'oxygène et de toute vapeur d'eau.

On procède ensuite au traitement thermique représenté sur la figure.

Il comprend une première partie à température ascendante au cours de laquelle durant une première étape on élève la température de 4°C/mn jusqu'à 250°C, puis une deuxième étape où l'élévation de température est de 1,5°C/mn jusqu'à 310°C et une troisième étape jusqu'à 410°C à une vitesse d'élévation de température de 4°C/mn. Vient ensuite une deuxième partie où la température est constante à 410°C baisse de température jusqu'à 250°C à 1,5°C/mn, puis jusqu'à la température ambiante à la vitesse de 2°C/mn.

Ce cycle thermique, donné comme exemple approprié pour le verre choisi, n'est pas le seul possible.

Compte tenu du Tg = 298°C et du Tf = 360°C pour le verre choisi, le cycle doit au moins monter à une température comprise entre 365°C et 420°C et y rester au moins une heure. Par ailleurs, l'atmosphère neutre utilisée pourrait également être constituée d'azote au lieu d'argon.

Ce cycle thermique peut être effectué en présence d'un champ magnétique.

## Revendications

**1/** Procédé pour la confection d'un matériau magnétique sous forme solide à partir d'une poudre de nitrure intermétallique du type Sm₂ Fe₁₇ N₃₋ₓ, avec 0 ≦ x ≦ 1 caractérisé par le fait que l'on opère de la façon suivante :
a - on mélange intimement ladite poudre avec de la poudre de verre ayant une température de transformation Tg comprise entre 260 et 310°C et une température de ramollissement Tf inférieure à 400°C, la proportion de poudre de verre étant comprise entre 10 et 30 % du volume total;
b - on comprime ce mélange de façon à obtenir un comprimé solide;
c - le comprimé obtenu est soumis, sous atmosphère de gaz neutre, à un cycle thermique au cours duquel, pendant au moins une heure, on atteint une température au moins égale à Tf + 5°C et au plus égale à 420°C.

**2/** Procédé selon la revendication 1, caractérisé en ce que l'opération c est effectuée en présence d'un champ magnétique.
